Europäisches Patentamt

European Patent Office

Office européen des brevets

(19)

(11) Publication number: **0 373 662 B1**

# EUROPEAN PATENT SPECIFICATION

(45) Date of publication of patent specification: **30.06.93**

(51) Int. Cl.⁵: **C08F 20/12**, C08F 2/50, C09J 133/06, C09J 7/02

(21) Application number: **89123188.8**

(22) Date of filing: **14.12.89**

(54) Photopolymerizable liquid composition, viscoelastic product obtained from the composition, and process for producing the viscoelastic product.

(30) Priority: **14.12.88 JP 315998/88**

(43) Date of publication of application:
**20.06.90 Bulletin  90/25**

(45) Publication of the grant of the patent:
**30.06.93 Bulletin  93/26**

(84) Designated Contracting States:
**DE FR GB IT**

(56) References cited:
**EP-A- 0 126 541**
**EP-A- 0 260 877**
**DE-A- 2 132 682**

(73) Proprietor: **SEKISUI KAGAKU KOGYO KABUSHIKI KAISHA**
**4-4 Nishitenma 2-chome Kita-ku**
**Osaka shi Osaka(JP)**

(72) Inventor: **Nakasuga, Akira**
**48-9, Marugasaki-cho**
**Omiya-shi Saitama(JP)**

(74) Representative: **Hansen, Bernd, Dr.rer.nat. et al**
**Hoffmann, Eitle & Partner Patentanwälte Arabellastrasse 4 Postfach 81 04 20**
**W-8000 München 81 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 373 662 B1

**Description**

FIELD OF THE INVENTION

The present invention relates to a photopolymerizable acrylic liquid composition, a viscoelastic product obtained from the composition, and a process for producing the viscoelastic product.

BACKGROUND OF THE INVENTION

Acrylic adhesive tapes, for example, are well known as a viscoelastic product made from acrylic polymers. The acrylic adhesive tapes are widely used because of their excellent adhesive performance, such as tackiness and cohesive force, and aging resistance, such as heat resistance, and weathering resistance.

In general, acrylic adhesive tapes of this kind are produced by coating or impregnating a substrate with a solution or emulsion of an adhesive, and then heat-drying the substrate, the solution or emulsion being obtained by subjecting a vinyl monomer comprising an alkyl (meth)acrylate as a main component to solution polymerization in organic solvent system or to emulsion polymerization in aqueous system.

In the case where adhesive solutions are used in the above process, it requires much energy for drying at high temperatures the adhesive solutions with which the substrates have been coated or impregnated, and also needs a large-scale solvent recovery equipment for preventing air pollution with solvents and a sufficient safety equipment for ensuring safety because the solvents are flammable.

Where emulsions of adhesives are used in the above process, even more drying energy is required than that for solvents in order to vaporize the water, although the problems associated with the use of solvents are eliminated. In addition, the use of emulsions are disadvantageous in the performance of the resulting adhesive tapes. The disadvantages are that the emulsifying agents which have come into the polymers through the polymerization process impair water resistance, and that monomers which can be used in the emulsion polymerization are limited in kind because water-soluble monomers cannot be used, so that the technique cannot satisfactorily cope with a variety of qualities required in adhesive tapes.

As a means for solving the above problems, there is disclosed in U.S. Patent 4,181,752 a process for the preparation of an acrylic adhesive tape which comprises subjecting a photopolymerizable liquid composition comprising a vinyl monomer mainly composed of an alkyl (meth)acrylate and, admixed with the vinyl monomer, a photopolymerization initiator such as benzoin ethyl ether, to ultraviolet radiation having wavelength of 300 to 400 nm at a light intensity of 7 mW/cm$^2$ or less, thereby to polymerize the vinyl monomer.

In the above process, due to the ultraviolet irradiation conducted at a relatively low light intensity, a high molecular weight polymer can be obtained from the vinyl monomer, whereby adhesive performance including tackiness and cohesive force are heightened. The above process, however, is disadvantageous in that the rate of the polymerization reaction is low and, hence, the production efficiency is so low that the process is not suitable for practical application. If the irradiation period is shortened to stop the reaction in the course of the polymerization, large proportions of monomers remain unreacted, leading to poor adhesive performance, particularly low cohesive force.

In general, the rate of the photopolymerization reaction of the above vinyl monomer is proportional to the square root of the product of the amount of the photopolymerization initiator and the light intensity. However, if the amount of the photopolymerization initiator is increased or the light intensity is heightened so as to accelerate the polymerization reaction and raise productivity, the resulting polymer disadvantageously has a low molecular weight, so that a balance between tackiness and cohesive force in the adhesive tape to be manufactured therefrom cannot be achieved at a high level. As described above, in the production of viscoelastic products such as acrylic adhesive tapes by the conventional photopolymerization techniques, excellent properties of the products and high production efficiencies cannot be attained simultaneously.

SUMMARY OF THE INVENTION

The present invention is to overcome the above-described problems.

One object of the present invention is to provide a photopolymerizable liquid composition from which acrylic viscoelastic products having high molecular weight and excellent properties can be produced at high efficiencies.

2

Another object of the invention is to provide an acrylic viscoelastic product obtained from the above composition.

A further object of the invention is to provide a process for producing the above acrylic viscoelastic product.

EP-A-0126541 discloses a photopolymerization initiator and a method of photopolymerizing a vinyl monomer, e.g. methyl methacrylate, by use of said initiator.

DE-A-2132682 discloses a photopolymerizable composition comprising a vinyl aromatic compound, e.g. styrene.

EP-A-0260877 discloses a compound containing functional groups having a function as a photosensitizer and also a function as a photoinitiator, and a reactive composition containing the same.

Subject matter of the present invention is a photopolymerizable liquid composition according to claim 1. Preferred embodiments of this composition are subject matter of claims 2 to 7.

Further subject of the present invention is a viscoelastic product according to claim 8 produced by irradiating the photopolymerizable liquid composition according to the invention with light, and a process according to claim 9 for producing a viscoelastic product which comprises irradiating the polymerizable liquid composition of the invention with light.

DETAILED DESCRIPTION OF THE INVENTION

The photopolymerizable liquid composition of this invention comprises a vinyl monomer comprising an alkyl (meth)acrylate as a main component and, admixed with the vinyl monomer, a photopolymerization initiator having at least two bonds per molecule which undergo photocleavage.

The viscoelastic product of this invention is produced by irradiating with light the photopolymerizable liquid composition as described above, thereby to polymerize the vinyl monomer.

The process for producing a viscoelastic product of this invention comprises irradiating with light the photopolymerizable liquid composition as described above, thereby to polymerize the vinyl monomer.

The above and other objects are accomplished with these constitutions.

In the present invention, the vinyl monomer comprising an alkyl (meth)acrylate as a main component is comprised of 97 to 60% by weight of an alkyl (meth)acrylate and 3 to 40% by weight of other vinyl monomer(s) copolymerizable therewith.

The alkyl (meth)acrylates are ones in which the alkyl group has 4 to 12 carbon atoms. Preferred examples thereof include n-butyl (meth)acrylate, 2-ethylhexyl (meth)acrylate, isooctyl (meth)acrylate, and isononyl (meth)acrylate.

Examples of other vinyl monomer(s) copolymerizable with the above-described alkyl (meth)acrylate are acrylic acid, methacrylic acid, acrylamide, acrylonitrile, methacrylonitrile, N-substituted acrylamides, hydroxyethyl acrylate, N-vinylpyrrolidone, maleic acid, itaconic acid, N-methylolacrylamide, and hydroxyethyl methacrylate. Additional examples thereof are vinyl monomers such as tetrahydrofurfuryl acrylate, poly-(ethylene glycol) acrylate, and poly(propylene glycol) acrylate, which give polymers having low glass transition temperature.

A particularly preferred example of the vinyl monomer according to the invention is a combination of 97 to 85% by weight of 2-ethylhexyl acrylate and 3 to 15% by weight of acrylic acid.

The photopolymerizable liquid composition of this invention contains, admixed with the vinyl monomer described above, a photopolymerization initiator having at least two bonds per molecule which undergo photocleavage. (Hereinafter, this photopolymerization initiator is often referred to as a "polyfunctional initiator".)

Examples of the polyfunctional initiator are a polymer, such as oligomer, of 4-(α-hydroxyisobutyryl)-α-methylstyrene, and the like.

Additional examples thereof which can be used in this invention are compounds described in JP-A-54-99185, 55-23187, 58-157805, 59-167546 and 60-84248. (The term "JP-A" as used herein means an "unexamined published Japanese patent application")

Further, the polyfunctional initiator can be obtained from some of the generally used photopolymerization initiators, which have one bond per molecule which undergoes photocleavage. (This photopolymerization initiator hereinafter is referred to as a "monofunctional initiator".) That is, a monofunctional initiator having a reactive group such as hydroxyl group is reacted with a polyfunctional compound, thereby giving a polyfunctional initiator. Examples of such monofunctional initiator having a reactive group include 4-(2-hydroxyethoxy)phenyl (2-hydroxy-2-propyl) ketone (Durocure 2959, manufactured by Merck & Co., Inc.) and 2- hydroxy-methyl-1-phenylpropan-1-one (Durocure 1173, manufactured by Merck & Co., Inc.). Examples of the polyfunctional compound reacting with hydroxyl groups in the monofunctional initiator include

3

polyisocyanates such as isophorone diisocyanate and hexanediol diisocyanate, polyfunctional epoxy compounds, and epichlorohydrin.

The polyfunctional initiator as described above may be used alone, but it is possible to use the same in combination with a monofunctional initiator, preferably with 20% by weight or less of a generally used monofunctional initiator. The combined use of the polyfunctional initiator with the monofunctional initiator makes it possible to correctly control the molecular weight which is the important factor to achieve the desired performances.

Examples of such monofunctional initiator include, in addition to the monofunctional initiators having a reactive group as described above, acetophenone-type ones such as methoxyacetophenone and 2,2-dimethoxy-2-phenylacetophenone, benzoin ether-type ones such as benzoin ethyl ether and benzoin isopropyl ether, and ketal-type ones such as benzyl dimethyl ketal, and further include halogenated ketones, acylphosphine oxides, and acylphosphonates.

In the present invention, the amount of the polyfunctional initiator added (or the total amount of the polyfunctional initiator and the monofunctional initiator in the case where the monofunctional initiator is also used) is from 0.001 to 5 parts by weight per 100 parts by weight of the vinyl monomers described above. If the amount thereof added is below 0.001 part by weight, a relatively large proportion of the monomer is apt to remain unpolymerized, so that the resulting product not only emits the odor of the monomer, but has a low cohesive force. On the other hand, if the amount of the photopolymerization initiator exceeds 5 parts by weight, the odor of the decomposed photopolymerization initiator becomes severe and the performance of the resulting products become poor, resulting in disadvantage in cost, although the polymerization reaction can be sufficiently completed. Therefore, the amount of the photopolymerization initiator added is fixed, depending upon the desired molecular weight of the polymer to be produced. The weight average molecular weight of the polymer is preferably regulated at about 300,000 to 1,000,000, more preferably about 500,000 to 1,000,000.

In the photopolymerizable liquid composition of this invention, a photoactive crosslinking agent may preferably be added together with the above-described photopolymerization initiator. Examples of such photoactive crosslinking agent include hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, and dipentaerythritol hexa(meth)-acrylate, and further include epoxy acrylates, polyester acrylates, and urethane acrylates.

Such photoactive crosslinking agent is generally added in an amount of 5 parts by weight or less per 100 parts by weight of the vinyl monomer, whereby crosslinks are formed between polymer molecules in the course of the photopolymerization reaction to improve the heat resistance of the viscoelastic products. Where the viscoelastic products are adhesive tapes, the adhesive can exhibit an increased cohesive force and improved holding power at high temperatures.

A tackifier which is a so-called tacky resin can be added to the photopolymerizable liquid composition of this invention. Examples of the tackifier include a rosin resin, a terpene phenol resin, a terpene resin, an aromatic hydrocarbon-modified terpene resin, a petroleum resin, a coumarone resin, an indene resin, a styrene resin, a phenol resin and a xylene resin.

The photopolymerizable liquid composition of the invention may further contain generally used ingredients such as thickening agents, thixotropic agents, extenders, and fillers. Examples of thickening agents include acrylic rubbers and epichlorohydrin rubbers, and examples of thixotropic agents include colloidal silica and polyvinylpyrrolidone. Examples of extenders include calcium carbonate, titanium oxide, and clay. Examples of fillers include: inorganic hollow substances such as glass balloons, alumina balloons, and ceramic balloons; organic solid spheres such as nylon beads, acrylic beads, and silicone beads; organic hollow substances such as vinylidene chloride balloons and acrylic balloons; and short fibers of, for example, polyester, rayon, and nylon. Thus, the photopolymerizable liquid composition of this invention can be obtained.

The photopolymerizable liquid composition of this invention is useful in the production of adhesive tapes and other various viscoelastic products such as heat-sensitive adhesive sheets, and sealants and vibration insulators for construction and automobile use. Before the photopolymerizable liquid composition described above is used in manufacturing viscoelastic products, the composition may be purged with an inert gas such as nitrogen gas in order to remove the oxygen dissolved in the composition. Alternatively, the dissolved oxygen may be removed by adding to the composition a compound having the effect of removing oxygen, such as phenyl diisodecyl phosphite, triisodecyl phosphite, and stannous octoate.

In the case where adhesive tapes, for example, are manufactured as a viscoelastic product, a process may be employed in which the liquid composition is coated or poured on a release paper or release frame, or a process may be employed in which a substrate such as a plastic film, paper, cellophane, fabric, nonwoven fabric, or metal foil is coated or impregnated with the liquid composition. The former process gives adhesive tapes with no substrates. Where a sealing medium, for example, is manufactured as a viscoelastic product, the liquid composition is poured into a long and narrow releasable frame, etc.

For smoothly performing the coating or impregnation of release paper and substrates with the liquid composition or the pouring of the composition into release frames or long and narrow releasable frames, etc., it is preferred that the viscosity of the composition to be applied be increased with the above-described extender or thixotropic agent to such an extent that coating, impregnation, or pouring can be carried out easily. In order to increase the viscosity of the liquid composition, there may be employed, besides the addition of an extender or thixotropic agent as described above, a method in which the vinyl monomer is partially polymerized beforehand by, for example, irradiation with a small amount of ultraviolet rays.

For the above-described coating, impregnation, or pouring, there may be employed equipment therefor which has been designed to prevent the liquid composition from coming into contact with air (oxygen). After the coating, impregnation, or pouring, the resulting structure may be passed through the inert inside of a box, during which the applied liquid composition is irradiated with light such as ultraviolet rays or visible rays through silica glass, or borate glass provided in the box. In place of the above method employing an inert box, there may be used a method in which the surface of the liquid composition which has been coated on a release paper or substrate or poured into an open frame or with which a substrate has been impregnated is temporarily covered with a releasable polyester film, and the covered liquid composition is then irradiated with light while its contact with air (oxygen) is being prevented. In this case, it is preferred to add beforehand the above-described compound having an oxygen-removing effect to the liquid composition.

As the light, ultraviolet rays are generally employed. In this case, an ultraviolet lamp which emits light having a spectral distribution in the wavelength range of from 300 to 400 nm is used. Examples of such light source include a chemical lamp, a Blacklight Lamp (trade name, manufactured by Toshiba Corporation, Japan), a low-pressure, high-pressure, or ultra high-pressure mercury lamp, and a metal halide lamp. The former two lamps are used for obtaining relatively low light intensity, and the latter four lamps for relatively high light intensity. The light intensity is varied generally in the range of from about 5 to 300 mW/cm$^2$ by changing the distance to the substrate being irradiated or controlling the electric voltage, with the irradiation time being about 0.5 to 5 minutes. Within such a short period of irradiation, the polymerization reaction can be substantially completed to attain a residual monomer content as low as about 0.5% by weight or less, which does not adversely affect the performance of the product.

Upon irradiation with light such as ultraviolet rays, the vinyl monomer comprising an alkyl (meth)acrylate as a main component undergoes polymerization, whereby a viscoelastic product of this invention can be obtained. The light irradiation may be performed at a constant light intensity, or may be carried out by two or more stages employing different light intensities so as to manufacture a viscoelastic product having more precisely regulated properties.

According to the present invention, when the photopolymerizable liquid composition, which comprises a vinyl monomer comprising an alkyl (meth)acrylate as a main component and, admixed with the vinyl monomer, a photopolymerization initiator having at least two bonds per molecule which undergo photocleavage, is irradiated with light, the photopolymerization initiator cleaves to generate radicals, whereby the polymerization of the vinyl monomer proceeds rapidly to yield a high molecular weight viscoelastic polymer having a very low residual monomer content.

Although the mechanism of producing such a high molecular weight polymer has not yet been made sufficiently clear, the following can be thought. The photopolymerization initiator cleaves to generate plural radicals due to the presence of at least two bonds per molecule which undergo photocleavage, and a polymer chain grows from the polyfunctional radical while adding monomer units. Since the resulting polymer molecule extends in plural directions from the polyfunctional radical, the thus formed polymer chain as a whole has a high molecular weight, even if the length of each chain segment extending from the starting monomer unit to the terminal monomer unit is as small as that in the case of conventional monofunctional initiators.

As described above, the photopolymerizable liquid composition of this invention comprises a vinyl monomer comprising of an alkyl (meth)acrylate as a main component and, admixed with the vinyl monomer, a photopolymerization initiator having at least two bonds per molecule which undergo photocleavage. When such composition is irradiated with light, the vinyl monomer rapidly polymerizes to form a polymer having a high molecular weight, owing to which viscoelastic products having excellent various properties can be obtained.

Further, since the polymer formed from the vinyl monomer easily attains a high molecular weight as described above, the production of high performance tapes can be conducted even under the high speed reaction conditions of an increased lamp intensity and an increased amount of photopolymerization initiator, and as a result, the tapes can be produced at a high productivity.

Furthermore, if the photopolymerization is performed in the presence of a photoactive crosslinking agent, the molecular chains of the resulting crosslinked polymer can have relatively long intercrosslink distances, since the photopolymerizable liquid composition gives a polymer having a high molecular weight according to the present invention. Due to such crosslinked structure, the viscoelastic products, such as adhesive tapes, according to the invention have an advantage that the cohesive force thereof can be heightened without greatly impairing their tackiness.

Moreover, the present invention does not require much drying energy as well as solvent recovery equipment and any special safety equipment, because there is no need to employ organic solvents and aqueous mediums. An even further advantage of the invention is that the irradiation zone need not be long, because high performance tapes can be produced at high speed reaction. Therefore, it is not necessary to use a solvent and the like, the tapes can be produced with a simple equipment, and production costs can be low according to the present invention.

The present invention will be explained in more detail by reference to the following Examples and Comparative Examples.

EXAMPLES 1 TO 4

Synthesis of Polyfunctional Initiator (GI-1)

In 20 parts by weight of methyl ethyl ketone were dissolved 5 parts by weight of 4-(2-hydroxyethoxy)-phenyl (2-hydroxy-2-propyl) ketone (Durocure 2959), which is a monofunctional initiator, and 2.76 parts by weight of isophorone diisocyanate. Thereto was added 0.02 part by weight of dibutyltin dilaurate as a catalyst, and the resulting mixture was heated at 120°C for 2 hours to a reaction. The solvent in the liquid reaction mixture was vaporized by means of an evaporator, giving a light-yellow solid reaction product.

Upon infrared spectroscopic analysis of this reaction product, it was found that the absorption peak at 2,250 $cm^{-1}$ due to the isocyanate had been disappeared from the absorption spectrum. The reaction product was further analyzed by gel permeation chromatography, and the resulting elution chart showed that the peaks of the monofunctional initiator and the isocyanate had been disappeared, and that the isophorone diisocyanate had reacted and linked with two molecules of the monofunctional initiator (dimerization) and, to some extent, reacted and linked with three molecules thereof (trimerization). Thus, it was confirmed that the above solid reaction product was a polyfunctional initiator. This polyfunctional initiator is termed GI-1.

Preparation of Photopolymerizable Liquid Compositions

To a mixture of 97 parts by weight of 2-ethylhexyl acrylate and 3 parts by weight of acrylic acid were added 1 part by weight of the polyfunctional initiator GI-1 obtained above and hexanediol diacrylate as a photoactive crosslinking agent. The amount of the photoactive crosslinking agent added was varied from 0 part by weight (no addition) to 0.03, 0.05, and 0.07 part by weight. Each of the resulting mixtures was stirred with a stirrer until it became uniform, thereby giving four kinds of photopolymerizable liquid compositions.

Manufacture of Adhesive Tapes

The photopolymerizable liquid compositions obtained above were purged with nitrogen gas to remove the oxygen dissolved therein. A nylon unwoven fabric placed on a transparent polyester film treated with a release agent was impregnated with each of the liquid compositions, and the surface of each impregnated unwoven fabric was covered with the same film. The composites were passed through squeeze rollers of an applicator to regulate their thickness uniform. Each of the resulting composites was then subjected to radiation by means of a chemical lamp at a light intensity of 10 mW/cm² (the primary wavelength region being at 365 nm), thereby processing a polymerization reaction to such an extent that the resulting residual monomers would cause no practical problems, i.e., until the residual monomer content became 0.3% by weight. Thus, four kinds of double-side pressure-sensitive tapes each having an adhesive layer thickness of 220 $\mu$m were prepared. In the above process, the irradiation time (polymerization reaction time) was 4.5 minutes for any tape.

Measurement of Physical Properties of Adhesive Tapes

According to the measurement methods described below, the four kinds of adhesive tapes obtained above were subjected to the measurements of the weight average molecular weight of pressure-sensitive adhesive (measured only on the tape employing the adhesive polymer prepared without adding a photoactive crosslinking agent), residual monomer content, tack strength, and holding power.

The results obtained are shown in Table 1 below.

(1) Weight Average Molecular Weight

The weight average molecular weight was measured by gel permeation chromatography in which polystyrene standards and tetrahydrofuran as an eluent were used and detection was effected by means of a refractometer.

(2) Residual Monomer Content

The residual monomer content was measured by a gas chromatograph (GC-6A, manufactured by Shimadzu Corporation, Japan) which had a separation column packed with Chromosorb W having supported thereon poly(ethylene glycol) (20M) and treated with acid and which was equipped with a hydrogen-flame ionization detector. The sample for this measurement was prepared by dissolving 100 mg of the adhesive sample in 5 ml of methyl acetate, taking 2 ml out of the resulting solution, and mixing the 2 ml solution with 2 ml of an internal standard solution obtained by dissolving 2-ethylhexyl methacrylate in methyl acetate.

(3) Tack Strength

One side of the double-side adhesive tape prepared above was adhered to a 25 $\mu$m-thick polyester film, and the resulting laminate was cut into an adhesive tape having a width of 25 mm and a length of 300 mm. A part of this tape which part ranged from a line 100 mm away from one end of the tape to a line 120 mm away from that end was adhered to a steel plate polished with #280 sandpaper, by pressing the part of the tape against the steel plate by means of one reciprocating travel of a 2 kg roller. Using an Instron tensile tester, the other end of the tape was pulled at an angle of 180°, i.e., in the opposite direction, to peel the tape from the steel plate at a speed of 300 mm/min under conditions of 23°C and 65% RH, and the force required to peel off the tape was measured. The peel force values are shown in Table 1 below as tack strength values (g/25mm width).

(4) Holding Power

One side of the double-side adhesive tape prepared above was adhered to a 100 $\mu$m-thick aluminum foil, and the resulting laminate was cut into an adhesive tape having a width of 25 mm. An end part of this tape was adhered to a steel plate polished with #280 sandpaper, by pressing the end part against the steel plate by means of one reciprocating travel of a 2 kg roller in such a manner that the press-adhered part was 25 mm wide and 25 mm long. A 1 kg weight was fixed to the other end of the tape, and the resulting steel plate with the tape and weight was hung at an ambient temperature of 100°C. The time required for the weight to fall off together with the tape was measured and is shown as holding power (hr) in Table 1 below.

Although the holding power is usually measured at 40°C, the above test was performed under severe conditions of 100°C for speeding up the measurement. Further, the time measurement was discontinued after a maximum of 150 hours.

EXAMPLES 5 TO 8

The same procedures as in Examples 1 to 4 were repeated except that in place of 1 part by weight of the polyfunctional initiator GI-1 used in Examples 1 to 4, 0.8 part by weight of an oligomer (n = 2 to 10) of 4-($\alpha$-hydroxyisobutyryl)-$\alpha$-methylstyrene (termed "GI-2") as a polyfunctional initiator and 0.2 part by weight of Durocure 1173 as a monofunctional initiator were used, the irradiation time was 4 minutes, and the adhesive layer thickness was 180 $\mu$m.

The results obtained are shown in Table 1 below.

EXAMPLES 9 TO 12

The same procedures as in Examples 1 to 4 were repeated except that in place of 1 part by weight of the polyfunctional initiator GI-1 used in Examples 1 to 4, 1.6 parts by weight of GI-2 as a polyfunctional initiator and 0.4 part by weight of Durocure 1173 as a monofunctional initiator were used, the amount of hexanediol diacrylate was varied from 0 part by weight (no addition) to 0.05, 0.10, and 0.20 part by weight, the light intensity was 25 mW/cm$^2$, the irradiation time was 2 minutes, and the adhesive layer thickness was 180 $\mu$m. The results obtained are shown in Table 1 below.

COMPARATIVE EXAMPLES 1 TO 4

The same procedures as in Examples 1 to 4 were repeated except that in place of 1 part by weight of the polyfunctional initiator GI-1 used in Examples 1 to 4, 0.4 part by weight of Durocure 1173 as a monofunctional initiator was used, the amount of hexanediol diacrylate was varied from 0 part by weight (no addition) to 0.04, 0.06, and 0.08 part by weight, the light intensity was 0.77 mW/cm$^2$, the irradiation time was 10 minutes, and the adhesive layer thickness was 200 $\mu$m.
The results obtained are shown in Table 2 below.

COMPARATIVE EXAMPLES 5 TO 8

The same procedures as in Examples 1 to 4 were repeated except that in place of 1 part by weight of the polyfunctional initiator GI-1 used in Examples 1 to 4, 0.4 part by weight of Durocure 1173 as a monofunctional initiator was used, the amount of hexanediol diacrylate was varied from 0 part by weight (no addition) to 0.20, 0.30, and 0.40 part by weight, the light intensity was 8.6 mW/cm$^2$, the irradiation time was 4 minutes, and the adhesive layer thickness was 200 $\mu$m.
The results obtained are shown in Table 2 below.

COMPARATIVE EXAMPLES 9 TO 12

The same procedures as in Examples 1 to 4 were repeated except that in place of 1 part by weight of the polyfunctional initiator GI-1 used in Examples 1 to 4, 2.0 parts by weight of Durocure 1173 as a monofunctional initiator was used, the amount of hexanediol diacrylate was varied from 0 part by weight (no addition) to 0.10, 0.15, and 0.20 part by weight, the light intensity was 0.77 mW/cm$^2$, the irradiation time was 5.6 minutes, and the adhesive layer thickness was 210 $\mu$m.

## Table 1

| Example No. | 2-ethyl-hexyl acry-late | acry-lic acid | GI-1 | GI-2 | Duro-cure 1173 | Hexane-diol diacry-late | Light inten-sity $(mW/cm^2)$ | Irradi-ation time (min) | Mole-cular weight (x10,000) | Tack strength (g/25mm-width) | Holding power (hr) | Residual monomer (wt%) |
|---|---|---|---|---|---|---|---|---|---|---|---|---|
| | Components of Photopolymerizable Liquid Composition (parts by weight) | | | | | | Irradiation Conditions | | Properties of Adhesive Tape | | | |
| 1 | 97 | 3 | 1.0 | – | – | 0 | 10 | 4.5 | 72 | 1140 | 0.1 | 0.20 |
| 2 | 97 | 3 | 1.0 | – | – | 0.03 | 10 | 4.5 | – | 940 | 0.3 | 0.28 |
| 3 | 97 | 3 | 1.0 | – | – | 0.05 | 10 | 4.5 | – | 1220 | 20 | 0.30 |
| 4 | 97 | 3 | 1.0 | – | – | 0.07 | 10 | 4.5 | – | 970 | 150 | 0.28 |
| 5 | 97 | 3 | – | 0.8 | 0.2 | 0 | 10 | 4.0 | 58 | 950 | 0.1 | 0.28 |
| 6 | 97 | 3 | – | 0.8 | 0.2 | 0.03 | 10 | 4.0 | – | 900 | 0.5 | 0.30 |
| 7 | 97 | 3 | – | 0.8 | 0.2 | 0.05 | 10 | 4.0 | – | 920 | 4.8 | 0.28 |
| 8 | 97 | 3 | – | 0.8 | 0.2 | 0.07 | 10 | 4.0 | – | 880 | 150 | 0.26 |
| 9 | 97 | 3 | – | 1.6 | 0.4 | 0 | 25 | 2.0 | 48 | 1120 | 0.1 | 0.28 |
| 10 | 97 | 3 | – | 1.6 | 0.4 | 0.05 | 25 | 2.0 | – | 1180 | 0.2 | 0.29 |
| 11 | 97 | 3 | – | 1.6 | 0.4 | 0.10 | 25 | 2.0 | – | 1060 | 0.5 | 0.28 |
| 12 | 97 | 3 | – | 1.6 | 0.4 | 0.20 | 25 | 2.0 | – | 980 | 150 | 0.30 |

The results obtained are shown in Table 2 below.

Table 2

| Comparative Example No. | Components of Photopolymerizable Liquid Composition (parts by weight) | | | | Irradiation Conditions | | Properties of Adhesive Tape | | | |
|---|---|---|---|---|---|---|---|---|---|---|
| | 2-ethyl-hexyl-acry-late | acry-lic acid | Duro-cure 1173 | Hexane-diol diacry-late | Light inten-sity (mW/cm$^2$) | Irradi-ation time (min) | Mole-cular weight (x10,000) | Tack strength (g/25mm-width) | Holding power (hr) | Residual monomer (wt%) |
| 1 | 97 | 3 | 0.4 | 0 | 0.77 | 10 | 50 | 1400 | 0.1 | 0.28 |
| 2 | 97 | 3 | 0.4 | 0.04 | 0.77 | 10 | – | 1380 | 0.4 | 0.32 |
| 3 | 97 | 3 | 0.4 | 0.06 | 0.77 | 10 | – | 1250 | 0.7 | 0.28 |
| 4 | 97 | 3 | 0.4 | 0.08 | 0.77 | 10 | – | 1270 | 100 | 0.25 |
| 5 | 97 | 3 | 0.4 | 0 | 8.6 | 4.0 | 22 | 1400 | 0.0 | 0.25 |
| 6 | 97 | 3 | 0.4 | 0.20 | 8.6 | 4.0 | – | 750 | 2.0 | 0.28 |
| 7 | 97 | 3 | 0.4 | 0.30 | 8.6 | 4.0 | – | 700 | 80 | 0.30 |
| 8 | 97 | 3 | 0.4 | 0.40 | 8.6 | 4.0 | – | 600 | 0.0 | 0.29 |
| 9 | 97 | 3 | 2.0 | 0 | 0.77 | 5.6 | 27 | 1350 | 0.0 | 0.30 |
| 10 | 97 | 3 | 2.0 | 0.10 | 0.77 | 5.6 | – | 1000 | 3.0 | 0.27 |
| 11 | 97 | 3 | 2.0 | 0.15 | 0.77 | 5.6 | – | 950 | 100 | 0.35 |
| 12 | 97 | 3 | 2.0 | 0.20 | 0.77 | 5.6 | – | 900 | 0.1 | 0.29 |

**Claims**

1. A photopolymerizable liquid composition which comprises 97 to 60 % by weight of an alkyl (meth)-acrylate having 4 to 12 carbon atoms in the alkyl group and 3 to 40 % by weight of another vinyl monomer copolymerizable therewith and admixed with said monomer (s) 0.001 to 5 parts by weight per 100 parts by weight of the total of, the vinyl monomers as described above, of a polyfunctional photopolymerisation initiator having at least 2 bonds per molecule which undergo photocleavage.

2. A photopolymerizable liquid composition as claimed in claim 1, wherein the other vinyl monomer is selected from the group consisting of acrylic acid, methacrylic acid, acrylamide, acrylonitrile, methacrylonitrile, N-substituted acrylamide, hydroxyethyl acrylate, N-vinyl pyrrolidone, maleic acid, itaconic acid, N-methylol acryl-amide and hydroxyethyl methacrylate.

3. A photopolymerizable liquid composition as claimed in claim 1, wherein the vinyl monomers are a mixture of 97 to 85 % by weight of 2-ethylhexyl acrylate and 3 to 15 % by weight of acrylic acid.

4. A photopolymerizable liquid composition as claimed in any of claims 1 to 3, wherein the photopolymerization initiator is a mixture of a polyfunctional initiator and a monofunctional initiator.

5. A photopolymerizable liquid composition as claimed in claim 4, wherein the amount of the monofunctional initiator is 20 % by weight or less based on the total weight of the polymerization initiator.

6. A photopolymerizable liquid composition as claimed in any of the preceding claims, which further comprises a photoactive crosslinking agent.

7. A photopolymerizable liquid composition as claimed in claim 6, wherein the amount of the photoactive crosslinking agent is 5 parts by weight or less per 100 parts by weight of the vinyl monomer.

8. A viscoelastic product produced by irradiating with light the photopolymerizable liquid composition as claimed in any of claims 1 to 7, thereby to polymerise said vinyl monomer.

9. A process for producing a viscoelastic product which comprises irradiating with light the photopolymerizable liquid composition as claimed in any of claims 1 to 7, thereby to polymerize said vinyl monomer.

**Patentansprüche**

1. Photopolymerisierbare flüssige Zusammensetzung, umfassend 97 bis 60 Gew.-% eines Alkyl(meth)-acrylats mit 4 bis 12 Kohlenstoffatomen in der Alkylgruppe, und 3 bis 40 Gew.-% eines anderen damit copolymerisierbaren Vinylmonomeren, und mit diesem Monomeren (diesen Monomeren) vermischt 0.001 bis 5 Gewichtsteile pro 100 Gewichtsteile der gesamten vorstehend genannten Vinylmonomeren eines polyfunktionellen Photopolymerisations-Initiators mit mindestens zwei Bindungen pro Molekül, die einer Photospaltung unterliegen.

2. Photopolymerisierbare flüssige Zusammensetzung nach Anspruch 1, dadurch gekennzeichnet, daß das andere Vinylmonomere ausgewählt ist aus der Gruppe bestehend aus Acrylsäure, Methacrylsäure, Acrylamid, Acrylnitril Methacrylnitril, N-substituiertem Acrylamid, Hydroxyethylacrylat, N-vinylpyrrolidon, Maleinsäure, Itaconsäure, N-Methylol-acrylamid und Hydroxyethylmethacrylat.

3. Photopolymerisierbare flüssige Zusammensetzung nach Anspruch 1, dadurch gekennzeichnet, daß die Vinylmonomeren eine Mischung aus 97 bis 85 Gew.-% 2-Ethylhexylacrylat und 3 bis 15 Gew.-% Acrylsäure sind.

4. Photopolymerisierbare flüssige Zusammensetzung nach einem der Ansprüche 1 bis 3, dadurch gekennzeichnet, daß der photopolymerisierbare Initiator eine Mischung aus einem polyfunktionellen Initiator und einem monofunktionellen Initiator ist.

5. Photopolymerisierbare flüssige Zusammensetzung nach Anspruch 4, dadurch gekennzeichnet, daß die Menge des monofunktionellen Initiators 20 Gew.-% oder geringer ist, bezogen auf die Gesamtmenge des Polymerisationsinitiators.

**6.** Photopolymerisierbare flüssige Zusammensetzung nach einem der vorhergehenden Ansprüche, dadurch gekennzeichnet, daß er außerdem ein photoaktives Vernetzungsmittel enthält.

**7.** Photopolymerisierbare flüssige Zusammensetzung nach Anspruch 6, dadurch gekennzeichnet, daß die Menge des photoaktiven Vernetzungsmittels 5 Gew.-% oder weniger pro 100 Gew.-% des Vinylmonomers beträgt.

**8.** Viskoelastisches Produkt, hergestellt durch Bestrahlung der photopolymerisierbaren flüssigen Zusammensetzung nach einem der Ansprüche 1 bis 7 durch Licht, wodurch das Vinylmonomer polymerisiert.

**9.** Verfahren zur Herstellung eines viskoelastischen Produktes, dadurch gekennzeichnet, daß es die Bestrahlung der photopolymerisierbaren flüssigen Zusammensetzung nach einem der Ansprüche 1 bis 7 mit Licht umfaßt, wodurch das Vinylmonomere polymerisiert wird.

**Revendications**

**1.** Composition liquide photopolymérisable qui comprend 97 à 60 % en poids d'un (méth)acrylate d'alkyle en $C_4$-$C_{12}$ et 3 à 40 % en poids d'un autre monomère vinylique polymérisable avec celui-ci et 0,001 à 5 parties en poids d'un inducteur polyfonctionnel de photopolymérisation ayant au moins deux liaisons par molécule qui subissent un photoclivage, en mélange avec le ou lesdits monomères, pour 100 parties en poids du total des monomères vinyliques décrits ci-dessus.

**2.** Composition liquide photopolymérisable selon la revendication 1, dans laquelle l'autre monomère vinylique est choisi parmi l'acide acrylique, l'acide méthacrylique, l'acrylamide, l'acrylonitrile, le méthacrylonitrile, les acrylamides N-substitués, l'acrylate d'hydroxyéthyle, la N-vinypyrrolidone, l'acide maléique, l'acide itaconique, le N-méthylolacrylamide et le méthacrylate d'hydroxyéthyle.

**3.** Composition liquide photopolymérisable selon la revendication 1, dans laquelle les monomères vinyliques sont un mélange de 97 à 85 % en poids d'acrylate de 2'-éthylhexyle et 3 à 15 % en poids d'acide acrylique.

**4.** Composition liquide photopolymérisable selon l'une quelconque des revendications 1 à 3, dans laquelle l'inducteur de photopolymérisation est un mélange d'un inducteur polyfonctionnel et d'un inducteur monofonctionnel.

**5.** Composition liquide photopolymérisable selon la revendication 4, dans laquelle la quantité de l'inducteur monofonctionnel est de 20% ou moins par rapport au poids total de l'inducteur de polymérisation.

**6.** Composition liquide photopolymérisable selon l'une quelconque des revendications précédentes qui comprend en outre un agent réticulant photoactif.

**7.** Composition liquide photopolymérisable selon la revendication 6, dans laquelle la quantité de l'agent réticulant photoactif est de 5 parties en poids ou moins pour 100 parties en poids du monomère vinylique.

**8.** Produit viscoélastique produit par irradiation par la lumière de la composition liquide photopolymérisable selon l'une quelconque des revendications 1 à 7, de manière à polymériser ledit monomère vinylique.

**9.** Procédé pour produire un produit viscoélastique qui comprend les radiations par la lumière de la composition liquide photopolymérisable selon l'une quelconque des revendications 1 à 7, de manière à polymériser ledit monomère vinylique.